# EUROPEAN PATENT APPLICATION

(11) **EP 2 759 368 A1**
(43) Date of publication of application: **30.07.2014**
(21) Application number: 14151859.7
(22) Date of filing: 21.01.2014
(51) Int. Cl.: B23K 20/12

(54) **friction welding joining process**

(30) Priority: 29.01.2013 US 201313753040
(71) Applicant: General Electric Company, Schenectady, New York 12345 (US)
(72) Inventor: Cui, Yan, Greenville, SC South Carolina 29615 (US); Kottilingam, Srikanth Chandrudu, Greenville, SC South Carolina 29615 (US); Tollison, Brian Lee, Greenville, SC South Carolina 29615 (US); Lin, Dechao, Greenville, SC South Carolina 29615 (US); Schick, David Edward, Greenville, SC South Carolina 29615 (US)
(74) Representative: Szary, Anne Catherine

(57) **Abstract**

A joining process (100) and a joined article are disclosed. The joining process (100) includes positioning an article (101) having a base material (105), and friction welding (104) a pre-sintered preform (103) to the base material (105). The pre-sintered preform (103) forms a feature (107) on the article (101). The joined article includes a feature (107) joined to a base material (105) by friction welding (104) of a pre-sintered preform (103).

## Description

### FIELD OF THE INVENTION

The present invention is directed to joining processes and joined articles. More particularly, the present invention is directed to friction welding.

### BACKGROUND OF THE INVENTION

High strength and oxidation resistant materials are often used in components for gas turbines. For example, nickel-based and cobalt-based superalloys are often used for buckets, blades, nozzles, or other components within gas turbines. Such superalloys can have poor weldability. Thus, features in such components are often formed by other processes.

For example, features are added to components of gas turbines having nickel-based and cobalt-based superalloys by machining. Machining results in a loss of material, can be expensive, can result in mis-machined components and/or scrap, and can take a relatively long time.

Additionally or alternatively, features are added to components of gas turbines having nickel-based and cobalt-based superalloys by other joining processes, such as brazing. However, brazing can suffer from drawbacks. Brazing uses a filler material that can introduce different considerations. For example, certain filler materials can cause lack of joint strength. In addition, brazing can require a higher level of sophistication from the operator. Brazing also requires placing an entire component into a vacuum furnace and heating of the entire part during the braze cycle, thereby limiting applicability to size constrained and/or temperature-sensitive applications.

Some components include dimensional requirements for sealing and/or locating of sub-components. For example, some components have identifiable features on the sub-components. In some cases, such sub-components are re-designed due to the limitations of the selected joining process.

A joining process and joined article that do not suffer from one or more of the above drawbacks would be desirable in the art.

### BRIEF DESCRIPTION OF THE INVENTION

In an exemplary embodiment, a joining process includes positioning an article having a base material, and friction welding a pre-sintered preform to the base material. The pre-sintered preform forms a feature on the article.

In another exemplary embodiment, a joining process includes positioning a turbine component having a base material, and friction welding a pre-sintered preform to the base material. The pre-sintered preform forms a feature on the turbine component. The base material has a composition, by weight, of between about 8.0% and about 8.7% Cr, between about 9% and about 10% Co, between about 5.25% and about 5.75% Al, up to about 0.9% Ti, between about 9.3% and about 9.7% W, up to about 0.6% Mo, between about 2.8% and about 3.3% Ta, between about 1.3% and about 1.7% Hf, up to about 0.1 % C, up to about 0.02% Zr, up to about 0.02% B, up to about 0.2% Fe, up to about 0.06% Si, up to about 0.1 % Mn, up to about 0.1 % Cu, up to about 0.01% P, up to about 0.004% S, up to about 0.1% Nb, and a balance of nickel. The pre-sintered preform has a composition of, by weight, about 50% a first material and 50% a second material. The first material has a composition, by weight, of between about 8.0% and about 8.7% Cr, between about 9% and about 10% Co, between about 5.25% and about 5.75% Al, up to about 0.9% Ti, between about 9.3% and about 9.7% W, up to about 0.6% Mo, between about 2.8% and about 3.3% Ta, between about 1.3% and about 1.7% Hf, up to about 0.1% C, up to about 0.02% Zr, up to about 0.02% B, up to about 0.2% Fe, up to about 0.06% Si, up to about 0.1 % Mn, up to about 0.1 % Cu, up to about 0.01 % P, up to about 0.004% S, up to about 0.1 % Nb, and a balance of nickel. The second material has a composition, by weight, of about 14% Cr, about 10% Co, about 3.5% Al, about 2.75% B, between about 2.5% and about 2.75% Ta, up to about 0.1% Y, and a balance of nickel. An interface region between the base material and the feature remains devoid of cracking when exposed to a temperature of between about 2000°F and about 2100°F for a duration of between about 90 minutes and about 150 minutes.

In another exemplary embodiment, a joined article includes a feature joined to a base material by friction welding of a pre-sintered preform.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

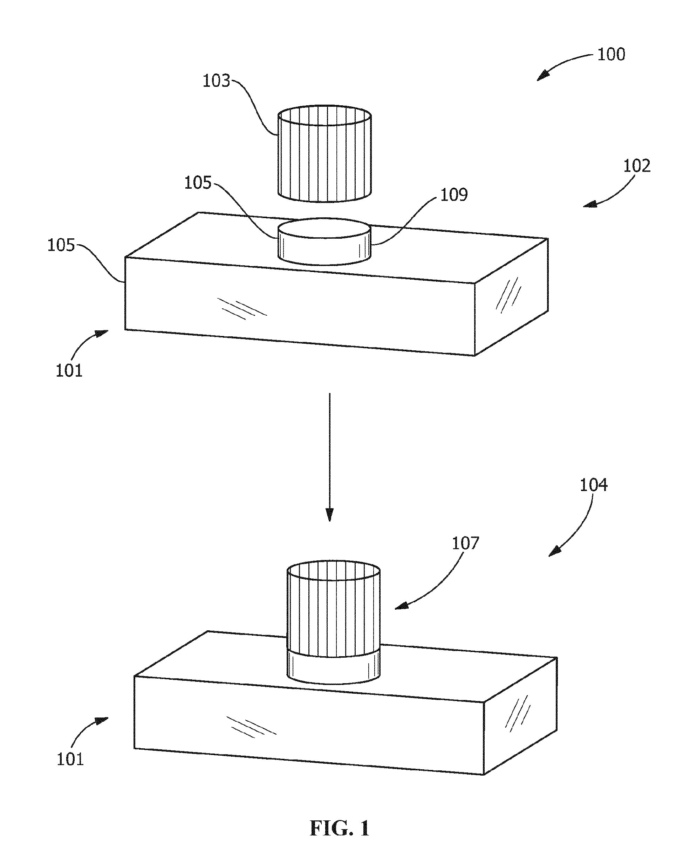

FIG. 1 is a schematic view of an exemplary joining process according to the disclosure.

Wherever possible, the same reference numbers will be used throughout the drawings to represent the same parts.

### DETAILED DESCRIPTION OF THE INVENTION

Provided is an exemplary joining process and joined article. Embodiments of the present disclosure, for example, in comparison to joining processes and joined articles that do not include one or more of the features disclosed herein, permit the joining of incompatible materials, reduce or eliminate mis-machining components, permit benefit from advantages of brazing and/or friction welding, permit increased metallurgical bonding, permit relatively unsophisticated operators to join elements, permit strain-age-cracking to be reduced or eliminated (for example, after post-weld heat treatment), permit production standards to be achieved, permit repair cycles to be extended, permit costs to be reduced, or a combination thereof.

Referring to FIG. 1, in one embodiment, a joining process 100 includes positioning an article 101 (step 102) and friction welding the article 101 (step 104). The friction welding (step 104) joins a pre-sintered preform 103 to a base material 105 on the article 101. The joining of the pre-sintered preform 103 and the base material 105 forms a feature 107 on the article 101.

The article 101 is any suitable component. In one embodiment, the article 101 is a component or sub-component of a turbine, for example, a bucket, a blade, a nozzle, a turbine wheel, a platform to a blade, a dovetail for a blade, a seal, or any other suitable element. The turbine is a gas turbine, turbine engine, steam turbine, wind turbine, or any other power generation system or propulsion system.

The feature 107 is any portion of the article 101 benefiting from the joining of the pre-sintered preform 103. In one embodiment, the feature 107 is a locating feature, a tongue or groove feature, an attachment feature, a keying feature, a protrusion, an interlocking feature, a securing feature, a mechanically interlocking feature, a fastening feature, an aperture arranged and disposed for closure, a distressed region, or a combination thereof.

The friction welding (step 104) includes oscillation and/or vibration (as in linear-friction welding) and/or rotation (as in rotary-friction welding) of the pre-sintered preform 103 and/or the base material 105 with predetermined operational conditions prior to and during contact between the pre-sintered preform 103 and the base material 105 to form the feature 107. The friction welding (step 104) is performed with any suitable friction welding or vibration welding systems (not shown). In one embodiment, the friction welding (step 104) is performed within an inert atmosphere, for example, an atmosphere that is devoid or substantially devoid of oxygen, such as a nitrogen atmosphere or an argon atmosphere. The friction welding (step 104) is without additional heat or with additional heat (for example, pre-heating of between about 400°F and about 2000°F, of about 400°F, of about 1000°F, of about 1500°F, of about 2000°F, or any suitable combination, sub-combination, range, or sub-range thereof).

In one embodiment, the contact of the friction welding (step 104) is within a weld pressure range, for example, between about 30 ksi and about 50 ksi, between about 35 ksi and about 45 ksi, between about 35 ksi and about 50 ksi, between about 30 ksi and about 45 ksi, at about 42 ksi, at about 45 ksi, at about 50 ksi, or any suitable combination, sub-combination, range, or sub-range thereof. The weld pressure range identifies an amount of pressure applied to maintain contact during the friction welding (step 104).

In one embodiment, the oscillation and/or vibration of the friction welding (step 104) is for a predetermined duration, for example, between about 15 seconds and about 19 seconds, between about 16 seconds and about 18 seconds, between about 16 seconds and about 19 seconds, between about 15 seconds and about 18 seconds, of about 16 seconds, of about 17 seconds, of about 18 seconds, or any suitable combination, sub-combination, range, or sub-range thereof.

In one embodiment, the friction welding (step 104) includes an oscillation of the pre-sintered preform 103 and/or the base material 105 within an amplitude range of between about 4 mm and about 6 mm, between about 5 mm and about 6 mm, between about 4 mm and about 5 mm, at about 4 mm, at about 5 mm, at about 6 mm, or any suitable combination, sub-combination, range, or sub-range thereof.

In one embodiment, the friction welding (step 104) includes an oscillatory frequency of between about 25 Hz and about 400 Hz, between about 25 Hz and about 200 Hz, between about 25 Hz and about 100 Hz, between about 25 Hz and about 75 Hz, at about 25 Hz, about 50 Hz, at about 75 Hz, or any suitable combination, sub-combination, range, or sub-range thereof.

After the friction welding (step 104), the joining process 100 is devoid of brazing or is followed by brazing. In embodiments where the brazing follows the friction welding (step 104), the brazing provides additional securing of the feature 107 and/or secures other joints (not shown).

The article 101 includes material corresponding to the desired application. As shown in FIG. 1, in one embodiment, all of the article 101 includes the base material 105. Alternatively, in one embodiment, only a portion of the article 101, such as a protrusion 109, includes the base material 105.

In one embodiment, the base material 105 is compatible with the friction welding (step 104) and/or incompatible with non-friction based joining with the pre-sintered preform 103, such as, brazing and fusion welding. As used herein the term "compatible" refers to being devoid of or substantially devoid of cracks (for example, strain age cracks) or an undesirable deformation flow pattern resulting from joining or operational use, as can be formed in friction welding of high gamma prime superalloy base metals to other superalloy base metals.

In one embodiment, the compatibility includes the base material 105 and the feature 107 remaining devoid of cracking when exposed to a suitable temperature for a suitable duration. Suitable temperatures include, but are not limited to, between about 2000°F and about 2100°F, between about 2000°F and about 2075°F, between about 2025°F and about 2100°F, between about 2025°F and about 2075°F, at about 2025°F, at about 2050°F, at about 2075°F, or any suitable combination, sub-combination, range, or sub-range therein. Suitable durations include, but are not limited to, between about 90 minutes and about 150 minutes, between about 120 minutes and about 150 minutes, between about 90 minutes and about 120 minutes, for about 90 minutes, for about 120 minutes, for about 150 minutes, or any suitable combination, sub-combination, range, or sub-range therein.

Suitable materials for the base material 105 include, but are not limited to, nickel-based alloys and cobalt-based alloys. In one embodiment, the base material 105 has a composition, by weight, of between about 8.0% and about 8.7% Cr, between about 9% and about 10% Co, between about 5.25% and about 5.75% Al, up to about 0.9% Ti (for example, between about 0.6% and about 0.9%), between about 9.3% and about 9.7% W, up to about 0.6% Mo (for example, between about 0.4% and about 0.6%), between about 2.8% and about 3.3% Ta, between about 1.3% and about 1.7% Hf, up to about 0.1% C (for example, between about 0.07% and about 0.1%), up to about 0.02% Zr (for example, between about 0.005% and about 0.02%), up to about 0.02% B (for example, between about 0.01 % and about 0.02%), up to about 0.2% Fe, up to about 0.06% Si, up to about 0.1% Mn, up to about 0.1% Cu, up to about 0.01% P, up to about 0.004% S, up to about 0.1 % Nb, and a balance of nickel.

In one embodiment, the base material 105 has a composition, by weight, of between about 13.7% and about 14.3% Cr, between about 9% and about 10% Co, between about 2.8% and about 3.2% Al, between about 4.7% and about 5.1% Ti, between about 3.5% and about 4.1% W, between about 1.4% and about 1.7% Mo, between about 2.4% and about 3.1 % Ta, up to about 0.12% C (for example, between about 0.08% and about 0.12%), up to about 0.04% Zr, up to about 0.02% B (for example, between about 0.005% and about 0.020%), up to about 0.35% Fe, up to about 0.3% Si, up to about 0.1 % Mn, up to about 0.1 % Cu, up to about 0.015% P, up to about 0.005% S, up to about 0.15% Nb, and a balance of nickel.

In one embodiment, the base material 105 has a composition, by weight, of about 7.5% Co, about 9.75% Cr, about 4.2% Al, about 3.5% Ti, about 1.5% Mo, about 4.8% Ta, about 6% W, up to about 0.5% Nb, up to about 0.15% Hf, up to about 0.08% C, up to about 0.00925% B, and a balance nickel.

In one embodiment, the base material 105 has a composition, by weight, of about 7% Cr, about 8% Co, about 2% Mo, about 5% W, about 6% Ta, about 6.2% Al, up to about 0.2% Hf, about 3% Re, and a balance nickel.

Suitable materials for the pre-sintered preform 103 include, but are not limited to, a mixture of a first material having a first melting point and a second material having a second melting point, the first melting point being lower than the second melting point. The mixture is at any suitable ratio for providing desired properties. Suitable ratios for the mixture include, but are not limited to, between about 40% and about 95% being the first material, between about 50% and about 80% being the first material, between about 5% and about 60% being the second material, between about 20% and about 50% being the second material, about 50% being the first material, about 50% being the second material, about 20% being the second material, about 80% being the first material, or any suitable combination, sub-combination, range, or sub-range therein.

In one embodiment, the first material is considered as a high-melt material and the first melting point is below about 1200°C, for example, between about 1120°C and about 1140°C. In one embodiment, the second material is considered as a low-melt material and the second melting point is above about 1200°C.

A suitable high-melt material has a composition, by weight, of between about 13.7% and about 14.3% Cr, between about 9% and about 10% Co, between about 2.8% and about 3.2% Al, between about 4.7% and about 5.1% Ti, between about 3.5% and about 4.1% W, between about 1.4% and about 1.7% Mo, between about 2.4% and about 3.1% Ta, up to about 0.12% C (for example, between about 0.08% and about 0.12%), up to about 0.04% Zr, up to about 0.02% B (for example, between about 0.005% and about 0.020%), up to about 0.35% Fe, up to about 0.3% Si, up to about 0.1% Mn, up to about 0.1% Cu, up to about 0.015% P, up to about 0.005% S, up to about 0.15% Nb, and a balance of nickel.

Another suitable high-melt material has a composition, by weight, of between about 8.0% and about 8.7% Cr, between about 9% and about 10% Co, between about 5.25% and about 5.75% Al, up to about 0.9% Ti (for example, between about 0.6% and about 0.9%), between about 9.3% and about 9.7% W, up to about 0.6% Mo (for example, between about 0.4% and about 0.6%), between about 2.8% and about 3.3% Ta, between about 1.3% and about 1.7% Hf, up to about 0.1% C (for example, between about 0.07% and about 0.1%), up to about 0.02% Zr (for example, between about 0.005% and about 0.02%), up to about 0.02% B (for example, between about 0.01% and about 0.02%), up to about 0.2% Fe, up to about 0.06% Si, up to about 0.1% Mn, up to about 0.1% Cu, up to about 0.0 1 % P, up to about 0.004% S, up to about 0.1 % Nb, and a balance of nickel.

Another suitable high-melt material has a composition, by weight, of between about 13.7% and about 14.3% Cr, between about 9% and about 10% Co, between about 2.8% and about 3.2% Al, between about 4.8% and about 5.2% Ti, between about 3.7% and about 4.3% W, between about 3.7% and about 4.3% Mo, up to about 0.1% Re (with Re and W being less than about 4.3%), up to about 0.1% Ta, up to about 0.1% Hf, up to about 0.19% C (for example, between about 0.15% and about 0.19%), up to about 0.15% Pd, up to about 0.3% Pt, up to about 0.01% Mg, up to about 0.1% Zr (for example, between about 0.02% and about 0.1 %), up to about 0.02% B (for example, between about 0.01% and about 0.02%), up to about 0.35% Fe, up to about 0.1% Si, up to about 0.1% Mn, up to about 0.015% P, up to about 0.0075% S, up to about 0.1 % Nb, and a balance of nickel.

Another suitable high-melt material has a composition, by weight, of between about 6.6% and about 7% Cr, between about 11.45% and about 12.05% Co, between about 5.94% and about 6.3% Al, up to about 0.02% Ti, between about 4.7% and about 5.1% W, between about 1.3% and about 1.7% Mo, between about 2.6% and about 3% Re, between about 6.2% and about 6.5% Ta, between about 1.3% and about 1.7% Hf, up to about 0.14% C (for example, between about 0.1 % and about 0.14%), up to about 0.3% Pt, up to about 0.0035% Mg, up to about 0.03% Zr, up to about 0.02% B (for example, between about 0.01% and about 0.02%), up to about 0.2% Fe, up to about 0.06% Si, up to about 0.1 % Mn, up to about 0.01 % P, up to about 0.004% S, up to about 0.1 % Nb, and a balance of nickel.

Another suitable high-melt material has a composition, by weight, of between about 16.5% and about 18.5% Cr, between about 27% and about 30% Mo, about 1.5% Ni, up to about 0.08% C, about 1.5% Fe, between about 3% and about 3.8% Si, up to about 0.03% P, up to about 0.03% S, up to about 0.15% O, and a balance of cobalt.

A suitable low-melt material has a composition, by weight, of between about 22.5% and about 24.25% Cr, up to about 0.3% Ti (for example, between about 0.15% and about 0.3%), between about 6.5% and about 7.5% W, between about 9% and about 11% Ni, between about 3% and about 4% Ta, up to about 0.65% C (for example, between about 0.55% and about 0.65%), between about 2% and about 3% B, about 1.3% Fe, up to about 0.4% Si, up to about 0.1% Mn, up to about 0.02% S, and a balance of cobalt.

Another suitable low-melt material has a composition, by weight, of about 14% Cr, about 10% Co, about 3.5% Al, about 2.75% B, between about 2.5% and about 2.75% Ta, up to about 0.1 % Y, and a balance of nickel.

Another suitable low-melt material has a composition, by weight, of about 14% Cr, about 9% Co, about 4% Al, about 2.5% B, and a balance of nickel.

Another suitable low-melt material has a composition, by weight, of about 15.3% Cr, about 10.3% Co, about 3.5% Ta, about 3.5% Al, about 2.3% B, and a balance of nickel.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A joining process, comprising:
   positioning an article having a base material; and
   friction welding a pre-sintered preform to the base material;
   wherein the pre-sintered preform forms a feature on the article.
2. The joining process of clause 1, wherein the friction welding is at a weld pressure between about 30 ksi and about 50 ksi.
3. The joining process of clause 1 or clause 2, wherein the friction welding is for a duration of between about 15 seconds and about 19 seconds.
4. The joining process of any preceding clause, wherein the friction welding has an amplitude of between about 4 mm and about 6 mm.
5. The joining process of any preceding clause, wherein the friction welding has an oscillatory frequency of between about 25 Hz and about 400 Hz.
6. The joining process of any preceding clause, wherein an interface region between the base material and the feature remains devoid of cracking when exposed to a temperature of between about 2000°F and about 2100°F for a duration of between about 90 minutes and about 150 minutes.
7. The joining process of any preceding clause, wherein the base material is incompatible for non-friction based joining with the pre-sintered preform.
8. The joining process of any preceding clause, wherein the base material includes a nickel-based alloy.
9. The joining process of any preceding clause, wherein the base material includes a cobalt-based alloy.
10. The joining process of any preceding clause, wherein the base material has a composition, by weight, of:
   between about 8.0% and about 8.7% Cr, between about 9% and about 10% Co, between about 5.25% and about 5.75% Al, up to about 0.9% Ti, between about 9.3% and about 9.7% W, up to about 0.6% Mo, between about 2.8% and about 3.3% Ta, between about 1.3% and about 1.7% Hf, up to about 0.1% C, up to about 0.02% Zr, up to about 0.02% B, up to about 0.2% Fe, up to about 0.06% Si, up to about 0.1% Mn, up to about 0.1 % Cu, up to about 0.01 % P, up to about 0.004% S, up to about 0.1 % Nb, and a balance of nickel;
   between about 13.7% and about 14.3% Cr, between about 9% and about 10% Co, between about 2.8% and about 3.2% Al, between about 4.7% and about 5.1% Ti, between about 3.5% and about 4.1% W, between about 1.4% and about 1.7% Mo, between about 2.4% and about 3.1% Ta, up to about 0.12% C, up to about 0.04% Zr, up to about 0.02% B, up to about 0.35% Fe, up to about 0.3% Si, up to about 0.1% Mn, up to about 0.1% Cu, up to about 0.015% P, up to about 0.005% S, up to about 0.15% Nb, and a balance of nickel;
   about 7.5% Co, 9.75% Cr, about 4.2% Al, 3.5% Ti, about 1.5% Mo, about 4.8% Ta, about 6% W, up to about 0.5% Nb, up to about 0.15% Hf, up to about 0.08% C, up to about 0.00925% B, and a balance nickel; or
   about 7% Cr, about 8% Co, about 2% Mo, about 5% W, about 6% Ta, about 6.2% Al, up to about 0.2% Hf, about 3% Re, and a balance nickel.
11. The joining process of any preceding clause, wherein the pre-sintered preform includes a first material having a first melting point and a second material having a second melting point, the first melting point being lower than the second melting point.
12. The joining process of any preceding clause, wherein the second material is at a concentration, by weight, of between about 5% and about 60%.
13. The joining process of any preceding clause, wherein the first material is at a concentration, by weight, of between about 40% and about 95%.
14. The joining process of any preceding clause, wherein the first material has a composition selected from the group consisting of, by weight, of:
   between about 13.7% and about 14.3% Cr, between about 9% and about 10% Co, between about 2.8% and about 3.2% Al, between about 4.7% and about 5.1% Ti, between about 3.5% and about 4.1% W, between about 1.4% and about 1.7% Mo, between about 2.4% and about 3.1% Ta, up to about 0.12% C, up to about 0.04% Zr, up to about 0.02% B, up to about 0.35% Fe, up to about 0.3% Si, up to about 0.1% Mn, up to about 0.1% Cu, up to about 0.015% P, up to about 0.005% S, up to about 0.15% Nb, and a balance of nickel;
   between about 8.0% and about 8.7% Cr, between about 9% and about 10% Co, between about 5.25% and about 5.75% Al, up to about 0.9% Ti, between about 9.3% and about 9.7% W, up to about 0.6% Mo, between about 2.8% and about 3.3% Ta, between about 1.3% and about 1.7% Hf, up to about 0.1% C, up to about 0.02% Zr , up to about 0.02% B, up to about 0.2% Fe, up to about 0.06% Si, up to about 0.1% Mn, up to about 0.1% Cu, up to about 0.0 1 % P, up to about 0.004% S, up to about 0.1 % Nb, and a balance of nickel;
   between about 13.7% and about 14.3% Cr, between about 9% and about 10% Co, between about 2.8% and about 3.2% Al, between about 4.8% and about 5.2% Ti, between about 3.7% and about 4.3% W, between about 3.7% and about 4.3% Mo, up to about 0.1 % Re, up to about 0.1 % Ta, up to about 0.1 % Hf, up to about 0.19% C, up to about 0.15% Pd, up to about 0.3% Pt, up to about 0.01% Mg, up to about 0.1% Zr, up to about 0.02% B, up to about 0.35% Fe, up to about 0.1% Si, up to about 0.1% Mn, up to about 0.015% P, up to about 0.0075% S, up to about 0.1% Nb, and a balance of nickel;
   between about 6.6% and about 7% Cr, between about 11.45% and about 12.05% Co, between about 5.94% and about 6.3% Al, up to about 0.02% Ti, between about 4.7% and about 5.1% W, between about 1.3% and about 1.7% Mo, between about 2.6% and about 3% Re, between about 6.2% and about 6.5% Ta, between about 1.3% and about 1.7% Hf, up to about 0.14% C, up to about 0.3% Pt, up to about 0.0035% Mg, up to about 0.03% Zr, up to about 0.02% B, up to about 0.2% Fe, up to about 0.06% Si, up to about 0.1 % Mn, up to about 0.01 % P, up to about 0.004% S, up to about 0.1 % Nb, and a balance of nickel; or
   between about 16.5% and about 18.5% Cr, between about 27% and about 30% Mo, about 1.5% Ni, up to about 0.08% C, about 1.5% Fe, between about 3% and about 3.8% Si, up to about 0.03% P, up to about 0.03% S, up to about 0.15% O, and a balance of cobalt.
15. The joining process of any preceding clause, wherein the second material has a composition selected from the group consisting of, by weight, of:
   between about 22.5% and about 24.25% Cr, up to about 0.3% Ti, between about 6.5% and about 7.5% W, between about 9% and about 11% Ni, between about 3% and about 4% Ta, up to about 0.65% C, between about 2% and about 3% B, about 1.3% Fe, up to about 0.4% Si, up to about 0.1% Mn, up to about 0.02% S, and a balance of cobalt;
   about 14% Cr, about 10% Co, about 3.5% Al, about 2.75% B, between about 2.5% and about 2.75% Ta, up to about 0.1% Y, and a balance of nickel;
   about 14% Cr, about 9% Co, about 4% Al, about 2.5% B, and a balance of nickel;
   about 15.3% Cr, about 10.3% Co, about 3.5% Ta, about 3.5% Al, about 2.3% B, and a balance of nickel; or
   about 28% Mo, about 17% Cr, about 3% Si, and a balance cobalt.
16. The joining process of any preceding clause, wherein the friction welding is in an inert environment with heat of at least about 400°F.
17. The joining process of any preceding clause, wherein the article is a turbine component selected from the group consisting of a bucket, a blade, a nozzle, a turbine wheel, a platform, a dovetail, a seal, and combinations thereof.
18. The joining process of any preceding clause, wherein the article is a component of a system selected from the group consisting of a gas turbine, a turbine engine, a steam turbine, a wind turbine, a power generation system, a propulsion system, and combinations thereof.
19. A joining process, comprising:
   positioning a turbine component having a base material; and
   friction welding a pre-sintered preform to the base material;
   wherein the pre-sintered preform forms a feature on the turbine component;
   wherein the base material has a composition, by weight, of between about 8.0% and about 8.7% Cr, between about 9% and about 10% Co, between about 5.25% and about 5.75% Al, up to about 0.9% Ti, between about 9.3% and about 9.7% W, up to about 0.6% Mo, between about 2.8% and about 3.3% Ta, between about 1.3% and about 1.7% Hf, up to about 0.1% C, up to about 0.02% Zr, up to about 0.02% B, up to about 0.2% Fe, up to about 0.06% Si, up to about 0.1% Mn, up to about 0.1% Cu, up to about 0.01 % P, up to about 0.004% S, up to about 0.1 % Nb, and a balance of nickel;
   wherein the pre-sintered preform has a composition of, by weight, about 50% a first material and 50% a second material;
   wherein the first material has a composition, by weight, of between about 8.0% and about 8.7% Cr, between about 9% and about 10% Co, between about 5.25% and about 5.75% Al, up to about 0.9% Ti, between about 9.3% and about 9.7% W, up to about 0.6% Mo, between about 2.8% and about 3.3% Ta, between about 1.3% and about 1.7% Hf, up to about 0.1% C, up to about 0.02% Zr, up to about 0.02% B, up to about 0.2% Fe, up to about 0.06% Si, up to about 0.1% Mn, up to about 0.1% Cu, up to about 0.01 % P, up to about 0.004% S, up to about 0.1 % Nb, and a balance of nickel;
   wherein the second material has a composition, by weight, of about 14% Cr, about 10% Co, about 3.5% Al, about 2.75% B, between about 2.5% and about 2.75% Ta, up to about 0.1 % Y, and a balance of nickel;
   wherein an interface region between the base material and the feature remains devoid of cracking when exposed to a temperature of between about 2000°F and about 2100°F for a duration of between about 90 minutes and about 150 minutes.
20. A joined article, comprising a feature joined to a base material by friction welding of a pre-sintered preform.

## Claims

1. A joining process, comprising:
positioning an article having a base material; and
friction welding a pre-sintered preform to the base material;
wherein the pre-sintered preform forms a feature on the article.

2. The joining process of claim 1, wherein the friction welding is at a weld pressure between about 30 ksi and about 50 ksi.

3. The joining process of claim 1 or claim 2, wherein the friction welding is for a duration of between about 15 seconds and about 19 seconds.

4. The joining process of any preceding claim, wherein the friction welding has an amplitude of between about 4 mm and about 6 mm.

5. The joining process of any preceding claim, wherein the friction welding has an oscillatory frequency of between about 25 Hz and about 400 Hz.

6. The joining process of any preceding claim, wherein an interface region between the base material and the feature remains devoid of cracking when exposed to a temperature of between about 2000°F and about 2100°F for a duration of between about 90 minutes and about 150 minutes.

7. The joining process of any preceding claim, wherein the base material is incompatible for non-friction based joining with the pre-sintered preform.

8. The joining process of any preceding claim, wherein the base material includes a nickel-based alloy or a cobalt-based alloy.

9. The joining process of any preceding claim, wherein the base material has a composition, by weight, of:
between about 8.0% and about 8.7% Cr, between about 9% and about 10% Co, between about 5.25% and about 5.75% Al, up to about 0.9% Ti, between about 9.3% and about 9.7% W, up to about 0.6% Mo, between about 2.8% and about 3.3% Ta, between about 1.3% and about 1.7% Hf, up to about 0.1% C, up to about 0.02% Zr, up to about 0.02% B, up to about 0.2% Fe, up to about 0.06% Si, up to about 0.1 % Mn, up to about 0.1 % Cu, up to about 0.01 % P, up to about 0.004% S, up to about 0.1 % Nb, and a balance of nickel;
between about 13.7% and about 14.3% Cr, between about 9% and about 10% Co, between about 2.8% and about 3.2% Al, between about 4.7% and about 5.1% Ti, between about 3.5% and about 4.1% W, between about 1.4% and about 1.7% Mo, between about 2.4% and about 3.1% Ta, up to about 0.12% C, up to about 0.04% Zr, up to about 0.02% B, up to about 0.35% Fe, up to about 0.3% Si, up to about 0.1% Mn, up to about 0.1% Cu, up to about 0.015% P, up to about 0.005% S, up to about 0.15% Nb, and a balance of nickel;
about 7.5% Co, 9.75% Cr, about 4.2% Al, 3.5% Ti, about 1.5% Mo, about 4.8% Ta, about 6% W, up to about 0.5% Nb, up to about 0.15% Hf, up to about 0.08% C, up to about 0.00925% B, and a balance nickel; or
about 7% Cr, about 8% Co, about 2% Mo, about 5% W, about 6% Ta, about 6.2% Al, up to about 0.2% Hf, about 3% Re, and a balance nickel.

10. The joining process of any preceding claim, wherein the pre-sintered preform includes a first material having a first melting point and a second material having a second melting point, the first melting point being lower than the second melting point.

11. The joining process of claim 10, wherein the second material is at a concentration, by weight, of between about 5% and about 60%.

12. The joining process of claim 10 or claim 11, wherein the first material is at a concentration, by weight, of between about 40% and about 95%.

13. The joining process of any one of claims 10 to 12, wherein the first material has a composition selected from the group consisting of, by weight, of:
between about 13.7% and about 14.3% Cr, between about 9% and about 10% Co, between about 2.8% and about 3.2% Al, between about 4.7% and about 5.1% Ti, between about 3.5% and about 4.1% W, between about 1.4% and about 1.7% Mo, between about 2.4% and about 3.1% Ta, up to about 0.12% C, up to about 0.04% Zr, up to about 0.02% B, up to about 0.35% Fe, up to about 0.3% Si, up to about 0.1% Mn, up to about 0.1% Cu, up to about 0.015% P, up to about 0.005% S, up to about 0.15% Nb, and a balance of nickel;
between about 8.0% and about 8.7% Cr, between about 9% and about 10% Co, between about 5.25% and about 5.75% Al, up to about 0.9% Ti, between about 9.3% and about 9.7% W, up to about 0.6% Mo, between about 2.8% and about 3.3% Ta, between about 1.3% and about 1.7% Hf, up to about 0.1% C, up to about 0.02% Zr , up to about 0.02% B, up to about 0.2% Fe, up to about 0.06% Si, up to about 0.1 % Mn, up to about 0.1 % Cu, up to about 0.01 % P, up to about 0.004% S, up to about 0.1 % Nb, and a balance of nickel;
between about 13.7% and about 14.3% Cr, between about 9% and about 10% Co, between about 2.8% and about 3.2% Al, between about 4.8% and about 5.2% Ti, between about 3.7% and about 4.3% W, between about 3.7% and about 4.3% Mo, up to about 0.1 % Re, up to about 0.1 % Ta, up to about 0.1 % Hf, up to about 0.19% C, up to about 0.15% Pd, up to about 0.3% Pt, up to about 0.01% Mg, up to about 0.1% Zr, up to about 0.02% B, up to about 0.35% Fe, up to about 0.1% Si, up to about 0.1% Mn, up to about 0.015% P, up to about 0.0075% S, up to about 0.1% Nb, and a balance of nickel;
between about 6.6% and about 7% Cr, between about 11.45% and about 12.05% Co, between about 5.94% and about 6.3% Al, up to about 0.02% Ti, between about 4.7% and about 5.1% W, between about 1.3% and about 1.7% Mo, between about 2.6% and about 3% Re, between about 6.2% and about 6.5% Ta, between about 1.3% and about 1.7% Hf, up to about 0.14% C, up to about 0.3% Pt, up to about 0.0035% Mg, up to about 0.03% Zr, up to about 0.02% B, up to about 0.2% Fe, up to about 0.06% Si, up to about 0.1 % Mn, up to about 0.01 % P, up to about 0.004% S, up to about 0.1 % Nb, and a balance of nickel; or
between about 16.5% and about 18.5% Cr, between about 27% and about 30% Mo, about 1.5% Ni, up to about 0.08% C, about 1.5% Fe, between about 3% and about 3.8% Si, up to about 0.03% P, up to about 0.03% S, up to about 0.15% O, and a balance of cobalt.

14. The joining process of any one of claims 10 to 13, wherein the second material has a composition selected from the group consisting of, by weight, of:
between about 22.5% and about 24.25% Cr, up to about 0.3% Ti, between about 6.5% and about 7.5% W, between about 9% and about 11% Ni, between about 3% and about 4% Ta, up to about 0.65% C, between about 2% and about 3% B, about 1.3% Fe, up to about 0.4% Si, up to about 0.1 % Mn, up to about 0.02% S, and a balance of cobalt;
about 14% Cr, about 10% Co, about 3.5% Al, about 2.75% B, between about 2.5% and about 2.75% Ta, up to about 0.1 % Y, and a balance of nickel;
about 14% Cr, about 9% Co, about 4% Al, about 2.5% B, and a balance of nickel;
about 15.3% Cr, about 10.3% Co, about 3.5% Ta, about 3.5% Al, about 2.3% B, and a balance of nickel; or
about 28% Mo, about 17% Cr, about 3% Si, and a balance cobalt.

15. A joining process, comprising:
positioning a turbine component having a base material; and
friction welding a pre-sintered preform to the base material;
wherein the pre-sintered preform forms a feature on the turbine component;
wherein the base material has a composition, by weight, of between about 8.0% and
about 8.7% Cr, between about 9% and about 10% Co, between about 5.25% and
about 5.75% Al, up to about 0.9% Ti, between about 9.3% and about 9.7% W, up to about 0.6% Mo, between about 2.8% and about 3.3% Ta, between about 1.3% and about 1.7% Hf, up to about 0.1% C, up to about 0.02% Zr, up to about 0.02% B, up to about 0.2% Fe, up to about 0.06% Si, up to about 0.1% Mn, up to about 0.1% Cu, up to about 0.01 % P, up to about 0.004% S, up to about 0.1 % Nb, and a balance of nickel;
wherein the pre-sintered preform has a composition of, by weight, about 50% a first material and 50% a second material;
wherein the first material has a composition, by weight, of between about 8.0% and about 8.7% Cr, between about 9% and about 10% Co, between about 5.25% and about 5.75% Al, up to about 0.9% Ti, between about 9.3% and about 9.7% W, up to about 0.6% Mo, between about 2.8% and about 3.3% Ta, between about 1.3% and about 1.7% Hf, up to about 0.1% C, up to about 0.02% Zr, up to about 0.02% B, up to about 0.2% Fe, up to about 0.06% Si, up to about 0.1% Mn, up to about 0.1% Cu, up to about 0.01 % P, up to about 0.004% S, up to about 0.1 % Nb, and a balance of nickel;
wherein the second material has a composition, by weight, of about 14% Cr, about 10% Co, about 3.5% Al, about 2.75% B, between about 2.5% and about 2.75% Ta, up to about 0.1 % Y, and a balance of nickel;
wherein an interface region between the base material and the feature remains devoid of cracking when exposed to a temperature of between about 2000°F and about 2100°F for a duration of between about 90 minutes and about 150 minutes.
